# EUROPEAN PATENT APPLICATION

(11) **EP 4 592 546 A1**
(43) Date of publication of application: **30.07.2025**
(21) Application number: 24220387.5
(22) Date of filing: 16.12.2024
(51) Int. Cl.: F16D 49/04, F16D 51/00, F16D 65/18, F16D 66/02

(54) **AUTOMATIC CONVEYOR DEVICE AND BRAKING DEVICE THEREFOR**

(30) Priority: 26.12.2023 CN 202311806614
(71) Applicant: OTIS Elevator Company, Farmington, CT 06032 (US)
(72) Inventor: Li, Shengbo, Shanghai, 200335 (CN)
(74) Representative: Schmitt-Nilson Schraud Waibel Wohlfrom Patentanwälte Partnerschaft mbB

(57) **Abstract**

The present invention provides an automatic conveyor device system and a braking device therefor. A braking device comprises: a brake drum; a brake arm, with a brake lining provided thereon; a spring member that acts on the brake arm, urging the brake lining on the brake arm to make contact with the brake drum; an electromagnetic actuator, comprising an electromagnetic rod, where when the electromagnetic actuator is energized, the electromagnetic rod lifts the brake arm to separate the brake lining of the brake arm from the brake drum; and a sensor, configured to monitor a first position and a second position with a given spacing a during the extending process of the electromagnetic rod, and to respectively output a first signal and a second signal when the electromagnetic rod passes through the first position and the second position. The braking device according to the embodiments of the present invention ensures that the gap between the brake arm and the brake drum is not too small.

## Description

The present invention relates to the field of braking devices for automatic conveyor devices, and in particular to a braking device for an automatic conveyor device and an automatic conveyor device provided with such a braking device.

The braking system for an automatic conveyor device usually uses brake linings to make frictional contact with the brake drum, thereby providing braking for the rotating shaft. The brake lining is usually mounted on the brake arm. When braking is not required, the brake arm is lifted by an electromagnet so as not to hinder the rotation of the rotating shaft. During the use of the braking device, the brake lining will continuously wear out, and the workers need to regularly adjust the gap between the brake lining and the brake drum when the brake arm is lifted. The workers generally rely on calipers to be inserted into the gap between the electromagnet and the brake arm to adjust the position of the nut in contact with the electromagnet on the brake arm. Due to the uncertainty of manual adjustment, when too much adjustment is made, the brake drum may vibrate when rotating with the rotating shaft, thus resulting in accidental contact between the brake drum and the brake arm, which poses a risk of smoking.

The object of the present application is to solve or at least alleviate the problems existing in the prior art.

According to one aspect, a braking device for an automatic conveyor device is provided, comprising:
a brake drum;
a brake arm, with a brake lining provided thereon;
a spring member that acts on the brake arm, urging the brake lining on the brake arm to make contact with the brake drum;
an electromagnetic actuator, comprising an electromagnetic rod, where when the electromagnetic actuator is energized, the electromagnetic rod lifts the brake arm to separate the brake lining of the brake arm from the brake drum; and
a sensor, configured to monitor a first position and a second position with a given spacing a during a process of lifting the brake arm by the electromagnetic rod, and to respectively output a first signal and a second signal when the electromagnetic rod passes through the first position and the second position.

Particular embodiments further may include at least one, or a plurality of, the following optional features, alone or in combination with each other:

Optionally, in an embodiment of the braking device, the braking device comprises a movable plate connected to and moving together with the electromagnetic rod, the sensor is a fixed contact switch, and the movable plate is in contact with the contact switch.

Optionally, in an embodiment of the braking device, the contact switch is an integrated contact switch and includes a first circuit for outputting the first signal and a second circuit for outputting the second signal.

Optionally, in an embodiment of the braking device, the contact switch maintains contact with the movable plate during the stroke of the electromagnetic rod from the first position to the second position.

Optionally, in an embodiment of the braking device, the contact switch comprises:
a housing;
an elastic button, comprising an outer end and an inner end opposite to each other, where the outer end of the elastic button is exposed at the outer side of the housing and in contact with the movable plate; and
a first circuit and a second circuit inside the housing, where when the electromagnetic rod moves through the first position, the corresponding movement of the inner end of the elastic button switches the first circuit to be on or off to output a first signal, and when the electromagnetic rod moves through the second position, the corresponding movement of the inner end of the elastic button switches the second circuit to be on or off to output a second signal.

Optionally, in an embodiment of the braking device, the given spacing a is greater than 1mm.

Optionally, in an embodiment of the braking device, the electromagnetic rod has an initial position and an end position, a maximum stroke S of the electromagnetic rod is the stroke from the initial position to the end position, the first position and the second position are located between the initial position and the end position, and the second position is closer to the end position than the first position, wherein, the distance between the second position and the end position is less than 10% of the maximum stroke S.

Optionally, in an embodiment of the braking device, the distance from the first position to the end position is between 30% and 50% of the maximum stroke S.

Optionally, in an embodiment of the braking device, the braking device comprises two brake arms symmetrically arranged on both sides of the brake drum, wherein, in the braking position, the two brake arms encircle the brake drum, where each brake arm comprises a first end and a second end opposite to each other, and the first end of the brake arm is rotatably connected to a fixed bracket, the spring member is a spring that acts on the brake arm to push the brake arm towards the brake drum, and the electromagnetic actuator acts on the second end of the brake arm.

Optionally, in an embodiment of the braking device, a position adjustment bolt is provided at the position where the brake arm is in contact with the electromagnetic rod of the electromagnetic actuator.

Optionally, in an embodiment of the braking device, the braking device further comprises a control device connected to the sensor, wherein, during the entire process of lifting the brake arm by the electromagnetic rod of the electromagnetic actuator, the control device monitors whether the first signal and the second signal are received, and outputs a prompt in the absence of the first signal or the second signal.

An automatic conveyor device is further provided, wherein, the automatic conveyor device comprises the braking device according to the various embodiments.

The braking device according to the embodiments of the present invention ensures that the gap between the brake arm and the brake drum is not too small.

With reference to the accompanying drawings, the disclosure of the present application will become easier to understand. Those skilled in the art would easily understand that these drawings are for the purpose of illustration, and are not intended to limit the protection scope of the present application. In addition, in the figures, similar numerals are used to denote similar components, where:
FIG. 1 shows a schematic view of an escalator device;
FIG. 2 shows a front view of a braking device for an automatic conveyor device according to an embodiment;
FIG. 3 shows a top view of the braking device in FIG. 2;
FIG. 4 shows a local enlarged view in FIG. 3;
FIG. 5 shows the schematic positions of the electromagnetic rod of the electromagnetic actuator according to an embodiment; and
FIG. 6 shows the internal structure of a sensor according to an embodiment.

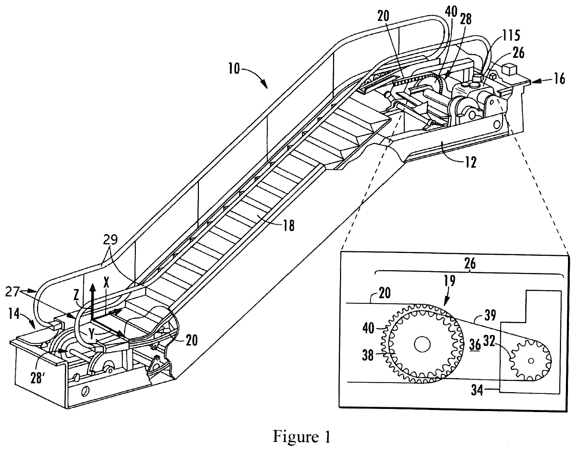

FIG. 1 illustrates an escalator 10. It should become apparent in the ensuing description that the present invention is applicable to other automatic conveyor devices, such as moving walks. The escalator 10 generally includes a truss 12 extending between a lower landing 14 and an upper landing 16. A plurality of sequentially connected steps or tread plates 18 are connected to a step chain 20 and travel through a closed loop path within the truss 12. A pair of balustrades 22 includes moving handrails 29. A drive machine 26, or drive system, is typically located in a machine space 28 under the upper landing 16. However, an additional machine space 28' can be located under the lower landing 14. The drive machine 26 is configured to drive the tread plates 18 and/or handrails 29 through the step chain 20. The drive machine 26 operates to move the tread plates 18 in a chosen direction at a desired speed under normal operating conditions.

The tread plates 18 make a 180 degree heading change in a turnaround area 19 located under the lower landing 14 and upper landing 16. The tread plates 18 are pivotally attached to the step chain 20 and follow a closed loop path of the step chain 20, running from one landing to the other, and back again.

The drive machine 26 includes a first drive member 32, such as motor output sheave, connected to a drive motor 34 through a belt reduction assembly 36 including a second drive member 38, such as an output sheave, driven by a drive chain 39, such as an output belt. The first drive member 32 in some embodiments is a driving member, and the second drive member 38 is a driven member.

As used herein, the first drive member 32 and/or the second drive member 38, in various embodiments, may be any type of rotational device, such as a sheave, pulley, gear, wheel, sprocket, cog, pinion, etc. The drive chain 39, in various embodiments, can be configured as a chain, belt, cable, ribbon, band, strip, or any other similar device that operatively connects two elements to provide a driving force from one element to another. For example, the drive chain 39 may be any type of interconnecting member that extends between and operatively connects the first drive member 32 and a second drive member 38. In some embodiments, as shown in FIG. 1, the first drive member 32 and the second drive member may provide a belt reduction. For example, first drive member 32 may be approximately 75 mm (2.95 inches) in diameter while the second drive member 38 may be approximately 750 mm (29.53 inches) in diameter. The belt reduction, for example, allows the replacement of sheaves to change the speed for 50 or 60 Hz electrical supply power applications, or different step speeds. However, in other embodiments, the second drive member 38 may be substantially similar to the first drive member 32.

As noted, the first drive member 32 is driven by drive motor 34 and thus is configured to drive the drive chain 39 and the second drive member 38. In some embodiments, the second drive member 38 may be an idle gear or similar device that is driven by the operative connection between the first drive member 32 and the second drive member 38 by means of drive chain 39. The drive chain 39 travels around a loop set by the first drive member 32 and the second drive member 38, which hereinafter may be referred to as a small loop. The small loop is provided for driving a larger loop which consists of the step chain 20, and is driven by an output sheave 40, for example. Under normal operating conditions, the drive chain 39 and the step chain 20 move in unison, based upon the speed of movement of the first drive member 32 as driven by the drive motor 34.

The escalator 10 also includes a controller 115 that is in electronic communication with the drive motor 34. The controller 115 may be located, as shown, in the machine space 28 of the escalator 10 and is configured to control the operation of the escalator 10. For example, the controller 115 may provide drive signals to the drive motor 34 to control the acceleration, deceleration, stopping, etc. of the tread plates 18 through the step chain 20. The controller 115 may be an electronic controller including a processor and an associated memory comprising computer-executable instructions that, when executed by the processor, cause the processor to perform various operations. The processor may be, but is not limited to, a single-processor or multi-processor system of any of a wide array of possible architectures, including field programmable gate array (FPGA), central processing unit (CPU), application specific integrated circuits (ASIC), digital signal processor (DSP) or graphics processing unit (GPU) hardware arranged homogenously or heterogeneously. The memory may be but is not limited to a random access memory (RAM), read only memory (ROM), or other electronic, optical, magnetic or any other computer readable medium.

Although described herein as a particular escalator drive system and particular components, this is merely exemplary, and those of skill in the art will appreciate that other escalator system configurations may operate with the invention disclosed herein.

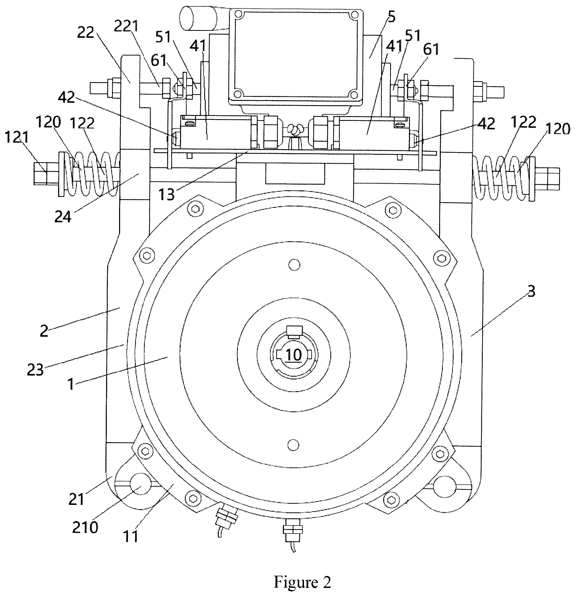

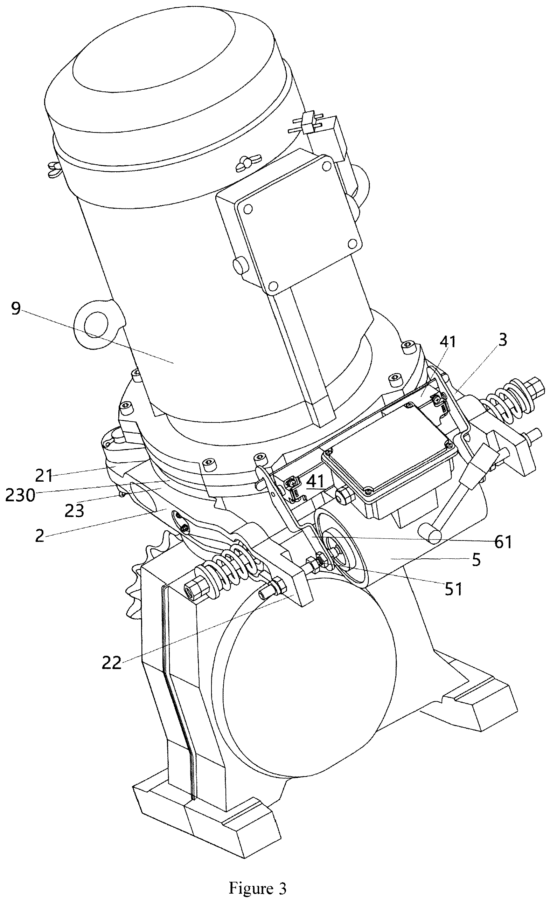

The specific structure of the braking device is described by referring to FIGS. 2 to 4. The braking device can be used for the brake drum 1 of the automatic conveyor device which can be fixed to the output shaft of the motor 34 or any other transmission shaft, thereby providing braking for the automatic conveyor device. The braking device may comprise: a brake drum 1; a brake arm 2 with a brake lining 230 provided thereon; a spring member 120 that acts on the brake arm 2, urging the brake lining 230 on the brake arm 2 to make contact with the brake drum 1; an electromagnetic actuator 5 comprising an electromagnetic rod 51, where when the electromagnetic actuator is energized, the electromagnetic rod 51 lifts or pushes up the brake arm 2, urging the brake lining 230 of the brake arm 2 to separate from the brake drum 1; and a sensor 41, configured to monitor a first position and a second position with a given spacing a during the process of lifting the brake arm 2 by the electromagnetic rod 51, and respectively output a first signal and a second signal when the electromagnetic rod 51 passes through the first position and the second position.

It should be appreciated that in the illustrated embodiment, the braking device comprises a pair of brake arms 2 and 3, where the pair of brake arms 2 and 3 each have an arc shape at the section 23 in contact with the brake drum 1 to match the periphery of the brake drum 1, so that during braking, the pair of brake arms 2 and 3 can encircle the brake drum 1 to provide the braking force. Accordingly, the electromagnetic actuator 5 can be an electromagnet with two electromagnetic rods 51 and 52. For example, it includes two electromagnets for pushing up the brake arms 2 and 3 on both sides. However, as an alternative, only a single brake arm on one side may be provided, and accordingly, the electromagnetic actuator 5 is an electromagnet that includes only a single electromagnetic rod.

In some embodiments, the brake arms 2 and 3 on both sides can be substantially symmetrically arranged. Taking the brake arm 2 on one side as an example, it includes a first end 21 and a second end 22 opposite to each other. The first end 21 of the brake arm 2 can be rotatably connected to the fixed bracket 11 by a rotating pin 210. In some embodiments, the electromagnetic actuator 5 acts on the second end 22 of the brake arm 2 to maximize the arm of the output force of the electromagnetic actuator 5. In some embodiments, the spring member is a spring 120 acting on the brake arm 2 to push the brake arm 2 towards the brake drum 1. The spring 120 can be arranged on a fixed guide post 122, between an adjustable member 121 at the end of the guide post 122 and the brake arm 2. The adjustable member 121 can be a nut that can move along the thread of the guide post 122, thereby adjusting the spring force of the spring 120. In some embodiments, the acting position 24 of the spring 120 is located between the second end 22 of the brake arm 2 and the section 23 where the brake lining is located. In some embodiments, a position adjustment bolt 221 is provided at the position where the electromagnetic rod 51 of the electromagnetic actuator is in contact with the brake arm 2, where the adjustment bolt 221 is mounted in a threaded hole at the second end 22 of the brake arm 2, so that the position tangential to the direction of rotation of the brake arm 2 about the rotational point 210 can be adjusted, thus adjusting the position of the brake arm 2 when being lifted as will be described in detail below.

In some embodiments, in order to accurately monitor the position of the electromagnetic rod with a simple structure, the braking device comprises a movable plate 61 connected to and moving together with the electromagnetic rod 51, and the sensor is a fixed contact switch 41, where each contact switch 41 is an integrated switch with a contact button 42. The contact button 42 maintains contact with the movable plate 61 during at least a portion of the stroke (between the first and second positions) of the electromagnetic rods 51 and 52 to monitor the position of the electromagnetic rod 51.

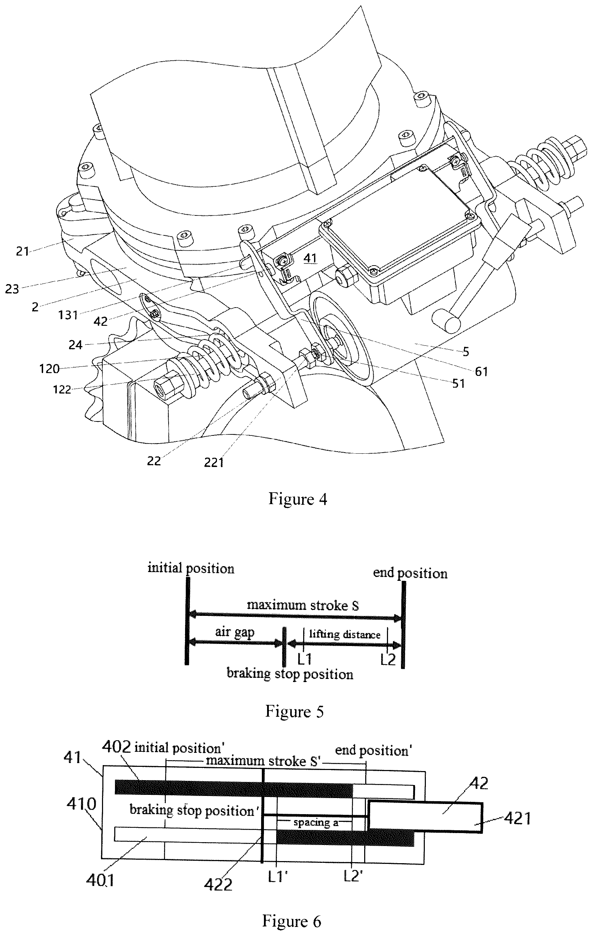

With continued reference to FIGS. 5 and 6, the stroke of the electromagnetic rod and the specific structure of the contact switch are described. For the electromagnetic rod 51, it has an initial position and an end position depending on the structure of the electromagnetic actuator, and the maximum stroke S of electromagnetic rod 51 is the stroke from the initial position to the end position. When the electromagnetic actuator 5 is mounted onto the fixed bracket 13, the initial and end positions of the electromagnetic rod are also determined. Generally speaking, the electromagnetic actuator 5 is provided with a spring inside to tend to push the electromagnetic rod 51 towards the end position. Its purpose is to keep the electromagnetic rod 51 of the electromagnetic actuator 5 in contact with the brake arm 2 (specifically, the adjustment bolt 221) rather than returning to the initial position even when the brake arm 2 is in the braking position, thereby improving the response speed. At this point, the position of the electromagnetic rod 51 is depending on the adjustment bolt 221 at the second end 22 of the brake arm 2. The position of the electromagnetic rod 51 where the brake arm 2 is in contact with the brake drum 1 for braking is hereinafter referred to as the braking stop position, where the distance from the braking stop position to the initial position is referred to as the air gap, and the distance from the braking stop position to the end position is referred to as the lifting distance. The braking stop position can be set by the adjustment bolt 221. It is expected that the braking stop position is set in the middle portion of the maximum stroke S. For example, the distance from the initial position is between 40% and 50% of the maximum stroke S. During the use of the braking device, as the brake lining 230 wears out, the air gap will gradually decrease and the lifting distance will gradually increase. When the air gap is too small, that is, when the braking stop position is too close to the initial position, if the brake lining continues to wear out, there is a risk that the brake lining 230 will not be able to come into contact with the brake drum 1, as the brake arm 2 is already abutting against the electromagnetic rod 51 that has been returned to the initial position. Therefore, the usual practice is to regularly send workers to the site to adjust the adjustment bolt 221 (adjusted toward the right in FIG. 2), which will cause the braking stop position of the electromagnetic rod 51 to move towards the end position. The adjustment made by the workers is achieved by using a vernier caliper and by rotating the adjustment bolt 221. However, such manual adjustment will easily go excessive, causing the braking stop position to be too close to the end position and the lifting distance to be too small. Due to the vibration that occurs when the brake drum 1 rotates, if the lifting distance of the electromagnetic rod 51 is too small, it will cause the gap between the brake lining 230 on the brake arm 2 and the brake drum 1 to be relatively small, resulting in smoking when the brake drum 1 rotates, which will trigger system alarms and emergency shutdowns. The contact switch according to the embodiments of the present invention can ensure that the lifting distance is greater than a given spacing a, which is also known as the safety spacing a.

The braking device according to an embodiment of the present invention ensures that the lifting distance of the electromagnetic rod 51 is greater than a given spacing a by monitoring two signals of a first position and a second position with a given spacing a. In some embodiments, the given spacing a can be set to be greater than 1mm. In alternative embodiments, the given spacing a can be set to be greater than 1.2mm. In some embodiments, an integrated switch with built-in first and second circuits is selected as the contact switch. Through the contact switch with built-in first and second circuits, the given spacing a is totally determined by the internal structure of the contact switch. Considering the limited space on the braking device, it is difficult to mount two sensors. The use of an integrated sensor not only simplifies installation, but also reduces the impact of installation errors on the detection results. In addition, for the contact switch, compared to electromagnetic sensors, optical sensors, etc. are more stable and reliable, and have lower costs.

As shown in FIG. 5, the first position L1 and the second position L2 are located between the initial position and the end position, and the second position L2 is closer to the end position compared to the first position L1. In other words, during the process of lifting the brake arm 2 by the electromagnetic rod 51, the electromagnetic rod 51 first passes through the first position L1 and then through the second position L2. In some embodiments, the distance between the second position L2 and the end position is less than 10% of the maximum stroke S, that is, the second position L2 is close to the end position. In some embodiments, the distance from the first position L1 to the end position is between 30% and 50% of the maximum stroke S, that is, the first position L1 is located near the midpoint of the maximum stroke and at the side closer to the end position.

With continued reference to FIG. 6, an exemplary contact switch is shown. The contact switch 41 may include: a housing 410; an elastic button 42 comprising an outer end 421 and an inner end 422 opposite to each other, where the outer end 421 of the elastic button 42 is exposed at the outer side of the housing 410 and in contact with the movable plate 61. Although not shown, the elastic button 42 is supported by a spring, so that the elastic button 42 moves synchronously with the movable plate 61 during at least a portion of the stroke of the movable plate 61. A first circuit 401 and a second circuit 402 are provided inside the housing. Due to the synchronous movement of the elastic button 42 with the electromagnetic rod 51 through the movable plate 61 during the movement of the electromagnetic rod from the first position to the second position, the initial position', end position', maximum stroke', braking stop position', first position L 1', and second position L2' of the inner end 422 of the elastic button 42 inside the contact switch corresponding to the position of the electromagnetic rod 51 are schematically shown. Of course, the inner end 422 of the elastic button 42 can also be configured such that it can only move from the first position L1' to the second position L2'. When the electromagnetic rod moves through the first position, the inner end 422 of the elastic button passes through the corresponding first position L1', which causes the first circuit 401 to be switched to be on or off to output the first signal. When the electromagnetic rod moves through the second position, the inner end 422 of the elastic button moves through the corresponding second position L2', which causes the second circuit 402 to be switched to be on or off to output the second signal. The aforementioned given spacing a can be configured by the first position L1' and second position L2' inside the contact switch, which are independent of the installation position of the contact switch, so as to allow for a certain installation position error of the contact switch. In alternative embodiments, the contact switch may take other suitable forms, such as having two elastic buttons corresponding to the first circuit 401 and the second circuit 402 respectively, and both in contact with the movable plate. In some embodiments, the inner end 422 of the elastic button can be a commonly used object to be detected, such as a contact piece, a magnet, or a baffle used to block light.

In some embodiments, the braking device further comprises a control device connected to a sensor. During the process of lifting the brake arm by the electromagnetic rod of the electromagnetic actuator, the control device monitors whether the first signal and the second signal are received, and outputs a prompt or alarm in the absence of the first or second signal. The control device can perform self-monitoring after the adjustment bolt 221 is adjusted. If it is found that the first signal is missing, it can be considered that the adjustment bolt 221 has been adjusted too much, and the workers can adjust it again. If it is found that the second signal is missing, it can be considered that there is a problem with the braking device or the sensor, and further inspection by the workers is needed.

According to another aspect of the present invention, an automatic conveyor device comprising the braking device according to the various embodiments is further provided. The braking device according to the embodiments of the present invention achieves the monitoring of the braking device status through a simple structure, avoiding the occurrence of smoking and accidental shutdowns of the braking device.

The specific embodiments described above in the present application are merely intended to describe the principles of the present application more clearly, wherein various components are clearly shown or described to facilitate the understanding of the principles of the present invention. Those skilled in the art may, without departing from the scope of the present application, make various modifications or changes to the present application. Therefore, it should be understood that these modifications or changes should be included within the scope of patent protection of the present application.

## Claims

1. A braking device for an automatic conveyor device, comprising:
a brake drum;
a brake arm, with a brake lining provided thereon;
a spring member that acts on the brake arm, urging the brake lining on the brake arm to make contact with the brake drum;
an electromagnetic actuator, comprising an electromagnetic rod, where when the electromagnetic actuator is energized, the electromagnetic rod lifts the brake arm to separate the brake lining of the brake arm from the brake drum; and
a sensor, configured to monitor a first position and a second position with a given spacing a during a process of lifting the brake arm by the electromagnetic rod, and to respectively output a first signal and a second signal when the electromagnetic rod passes through the first position and the second position.

2. The braking device according to claim 1, wherein the braking device comprises a movable plate connected to and moving together with the electromagnetic rod, the sensor is a fixed contact switch, and the movable plate is in contact with the contact switch.

3. The braking device according to claim 2, wherein the contact switch is an integrated contact switch and includes a first circuit for outputting the first signal and a second circuit for outputting the second signal.

4. The braking device according to claim 2 or 3, wherein the contact switch maintains contact with the movable plate during a stroke of the electromagnetic rod from the first position to the second position.

5. The braking device according to any of claims 2 to 4, wherein the contact switch comprises:
a housing;
an elastic button, comprising an outer end and an inner end opposite to each other, where the outer end of the elastic button is exposed at the outer side of the housing and in contact with the movable plate; and
a first circuit and a second circuit inside the housing, where when the electromagnetic rod moves through the first position, a corresponding movement of the inner end of the elastic button switches the first circuit to be on or off to output a first signal, and when the electromagnetic rod moves through the second position, a corresponding movement of the inner end of the elastic button switches the second circuit to be on or off to output a second signal.

6. The braking device according to any of claims 1 to 5, wherein the given spacing a is greater than 1mm.

7. The braking device according to any of claims 1 to 6, wherein the electromagnetic rod has an initial position and an end position, a maximum stroke S of the electromagnetic rod is a stroke from the initial position to the end position, the first position and the second position are located between the initial position and the end position, and the second position is closer to the end position than the first position, wherein, a distance between the second position and the end position is less than 10% of the maximum stroke S.

8. The braking device according to claim 7, wherein the distance from the first position to the end position is between 30% and 50% of the maximum stroke S.

9. The braking device according to any of claims 1 to 8, wherein the braking device comprises two brake arms symmetrically arranged on both sides of the brake drum, wherein, in a braking position, the two brake arms encircle the brake drum, where each brake arm comprises a first end and a second end opposite to each other, and the first end of the brake arm is rotatably connected to a fixed bracket, the spring member is a spring that acts on the brake arm to push the brake arm towards the brake drum, and the electromagnetic actuator acts on the second end of the brake arm.

10. The braking device according to claim 9, wherein a position adjustment bolt is provided at a position where the brake arm is in contact with the electromagnetic rod of the electromagnetic actuator.

11. The braking device according to any of claims 1 to 10, wherein the braking device further comprises a control device connected to the sensor, wherein, during an entire process of lifting the brake arm by the electromagnetic rod of the electromagnetic actuator, the control device monitors whether the first signal and the second signal are received, and outputs a prompt in the absence of the first signal or the second signal.

12. An automatic conveyor device, wherein the automatic conveyor device comprises the braking device according to any of claims 1 to 11.
